(19) **Europäisches Patentamt**

**European Patent Office**

**Office européen des brevets**

(11) Numéro de publication : **0 335 786 B1**

(12) # FASCICULE DE BREVET EUROPEEN

(45) Date de publication du fascicule du brevet :
**18.12.91 Bulletin 91/51**

(51) Int. Cl.⁵ : **B64C 27/00, F16F 7/10**

(21) Numéro de dépôt : **89400841.6**

(22) Date de dépôt : **24.03.89**

(54) **Contre-fiche élastique à résonateur hydro-mécanique intégré notamment pour la suspension d'une boîte de transmission sur un giravion, et dispositif de suspension en comportant application.**

Le dossier contient des informations techniques présentées postérieurement au dépôt de la demande et ne figurant pas dans le présent fascicule.

(30) Priorité : **30.03.88 FR 8804190**

(43) Date de publication de la demande :
**04.10.89 Bulletin 89/40**

(45) Mention de la délivrance du brevet :
**18.12.91 Bulletin 91/51**

(84) Etats contractants désignés :
**DE GB IT**

(56) Documents cités :
**EP-A- 0 233 792**
**FR-A- 2 449 826**
**GB-A- 539 720**

(73) Titulaire : **AEROSPATIALE Société Nationale Industrielle**
**37, Boulevard de Montmorency**
**F-75781 Paris Cédex 16 (FR)**

(72) Inventeur : **Aubry, Jacques Antoine**
**2 Avenue Marie Gasquet**
**F-13480 Cabries (FR)**
Inventeur : **Deguise, Michel**
**20 rue Joliot Curie**
**F-13370 Mallemort (FR)**
Inventeur : **Yana, Victor Yves**
**37 Boulevard Perrin**
**F-13013 Marseille (FR)**

(74) Mandataire : **Barnay, André François**
**Cabinet Barnay 80 rue Saint-Lazare**
**F-75009 Paris (FR)**

## Description

La présente invention est relative à une contre-fiche élastique à résonateur du type masse/ressort intégré, utilisée notamment, bien que non exclusivement, dans les systèmes de suspension à barres de la transmission principale sur la structure du fuselage des aéronefs à voilure rotative pour filtrer les vibrations engendrées par le rotor sustentateur de ces aéronefs.

Ces systèmes de suspension sont bien connus et comportent une liaison entre la boîte de transmission principale et le fuselage, constituée par un ensemble de barres rigides formant un pylône, qui sont reliées chacune au fuselage de l'aéronef par l'intermédiaire d'un dispositif élastique et le cas échéant d'un résonateur associé pour filtrer les excitations dynamiques longitudinales, latérales et verticales provenant de la tête du rotor.

Le document FR-A-2450200 décrit un dispositif de suspension dans lequel des éléments rigides du système, ou pylône, sont reliés à la structure du fuselage par des plots élastiques en élastomère travaillant en cisaillement, introduisant ainsi une caractéristique d'élasticité axiale. Ce dispositif ne comporte cependant pas d'élément résonateur nécessaire à l'obtention d'un haut degré d'atténuation des vibrations entre le rotor et le fuselage.

Le document EP-A-0015378 décrit un dispositif élastique associé à un résonateur comportant application du principe du "levier liquide", c'est-à-dire un mécanisme dans lequel un liquide à faible viscosité agit comme un levier sur un arbre et une masse solidaires d'un ressort. Ce liquide à faible viscosité, contenu à l'intérieur d'un volume variable par deux membranes métalliques ondulées qui assurent l'étanchéité du système est mis en pression par un ressort. La mise en mouvements alternés de la masse battante axiale est ainsi assurée par les variations de pression du liquide, résultant elles-mêmes des variations provoquées du volume du contenant dudit liquide. Le résonateur est guidé axialement par des roulements à billes.

D'une part ce type de résonateur est d'une fabrication coûteuse particulièrement en ce qui concerne les membranes métalliques, d'autre part, il est très difficile d'obtenir une bonne fiabilité de ces membranes du fait qu'en fonctionnement, elles supportent d'importantes contraintes dynamiques et que toute crique de fatigue qui s'y produit provoque une fuite de liquide et par conséquent une perte totale d'efficacité du résonateur.

Le document FR-A-2449826 décrit et représente une contre-fiche élastique incorporant un résonateur hydro-mécanique à système masse/ressort du type à amplification hydraulique du déplacement de la masse battante du type comprenant un corps constitué de deux éléments tubulaires coaxiaux interne et externe reliés ensemble de façon étanche par au moins un élément en matière élastomère de façon à, d'une part, leur permettre sous des sollicitations axiales, des déplacements relatifs limités avec rappel élastique en position moyenne et, d'autre part, à assurer la fermeture étanche de deux chambres hydrauliques disposées à l'intérieur de chaque extrémité desdits éléments tubulaires et remplies d'un liquide à faible viscosité, ladite masse battante constituant un piston à double face monté coulissant à l'intérieur de l'élément tubulaire interne et dont les faces opposées délimitent les deux chambres hydrauliques.

La contre-fiche décrite dans ce document n'offre pas des conditions de fonctionnement satisfaisantes dans la mesure où il n'est notamment pas possible de l'utiliser en position verticale et où son rapport d'amplification est structurellement limité à des valeurs faibles.

Afin de remédier à ces inconvénients, l'invention propose une contre-fiche du type connu de FR-A-2449826, caractérisée en ce que les deux éléments tubulaires sont reliés entre eux de façon étanche à leurs extrémités par deux paliers cylindriques, en ce que la masse battante est sollicitée en position neutre pas deux ressorts antagonistes, en ce que la masse battante constitue un piston creux monté coulissant sur deux cylindres creux coaxialement opposés dans une troisième chambre hydraulique fermée constituée à l'intérieur de l'élément tubulaire interne et remplie du même liquide à faible viscosité, lesdits cylindres débouchant chacun dans l'une des chambres hydrauliques disposées à chaque extrémité des éléments tubulaires, et en ce que les surfaces d'extrémités des deux chambres hydrauliques sont égales et plus grandes que les sections internes des deux cylindres creux sur lesquelles coulisse le piston creux à double face.

Selon une caractéristique avantageuse de l'invention, les cylindres sont des bossages tubulaires solidaires d'organes de fermeture des extrémités dudit élément et s'étendant à l'intérieur de celui-ci, ladite masse-piston étant sollicitée en position neutre par les deux ressorts qui sont disposés autour desdits bossages de part et d'autre de la masse.

L'invention propose également un dispositif de suspension à barres pour la boite de transmission principale sur la structure du fuselage d'un aéronef à voilure tournante caractérisé en ce que chaque barre comporte une contre-fiche élastique à résonateur du type masse-ressort à amplification hydraulique du déplacement de la masse battante réalisée conformément aux enseignements de l'invention.

La description qui va suivre, en regard des dessins annexés à titre d'exemples non limitatifs, permettra de bien comprendre comment l'invention peut être mise en pratique.

La figure 1 est une vue en coupe longitudinale d'une contre-fiche élastique à résonateur hydro-mécanique intégré suivant l'invention.

La figure 2 est une vue en élévation latérale d'un exemple d'application de contre-fiches élastiques à résonateur intégré suivant l'invention à la fixation de la boite de transmission sur le fuselage d'un hélicoptère pour assurer également le filtrage et l'atténuation des vibrations en provenance du rotor.

La figure 3 est une vue en plan de dessus.

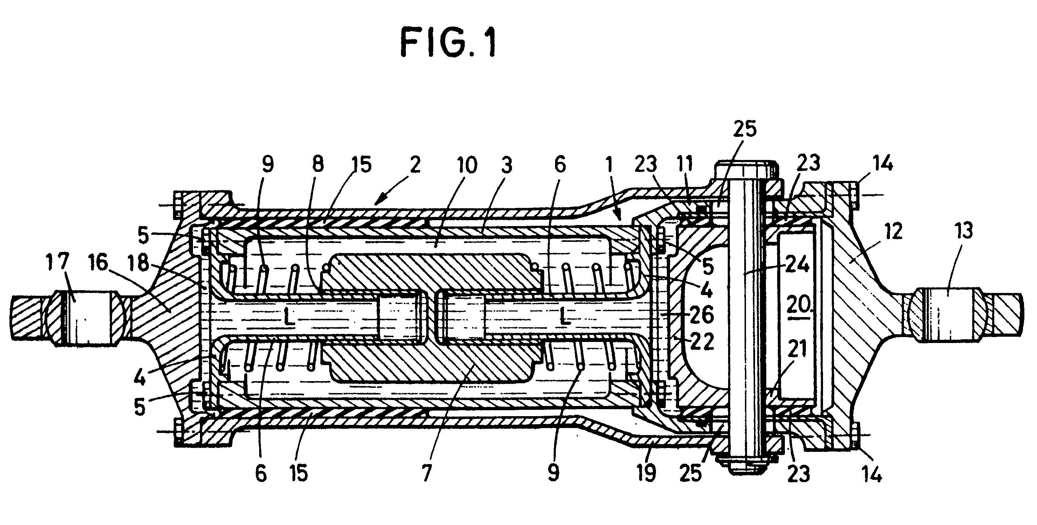

Comme représenté à la figure 1, une contre-fiche élastique à résonateur hydro-mécanique intégré suivant l'invention comprend un premier élément tubulaire 1 disposé coaxialement à l'intérieur d'un second élément tubulaire 2.

L'élément tubulaire interne 1 comprend un corps 3, qui peut être cylindrique, ouvert à ses deux extrémités, chacune de celles-ci est fermée par un organe 4 fixé au moyen de vis 5 et comportant en son centre un bossage tubulaire 6 dirigé axialement vers l'intérieur, de telle sorte que les deux bossages tubulaires 6 se trouvent alignés, et leurs longueurs étant égales et inférieures chacune à la moitié de celle du corps 3 afin de laisser un intervalle libre entre leurs extrémités.

Une masse 7 en métal lourd, par exemple en inermel, ayant la forme d'un solide de révolution allongé et présentant deux trous borgnes alignés axialement et débouchant en sens opposés dans les faces d'extrémité de la masse, est montée coulissante avec un léger jeu sur les bossages 6 et autour de ceux-ci, par l'intermédiaire de bagues de frottement 8.

La masse coulissante 7 est maintenue dans une position intermédiaire par deux ressorts hélicoïdaux antagonistes 9 disposés chacun autour d'un bossage 6 entre l'organe 4 et la masse et on comprend que, pour pouvoir coulisser librement dans la chambre délimitée par l'élément tubulaire 1, son diamètre doit être inférieur à celui de l'élément 1 ; enfin ladite chambre est remplie d'un fluide 10 ayant une faible viscosité.

L'ensemble ainsi constitué est complété par un organe 11 ayant un diamètre un peu plus grand que celui de l'élément 1 formant une jupe qui est fixée à l'une des extrémités de celui-ci, par-dessus l'organe 4 et de même que ce dernier par les vis 5.

On comprend que l'espace intérieur de la jupe 11 communique avec le bossage tubulaire 6 correspondant. Enfin, la jupe 11, à l'opposé de l'organe 4, est pourvue d'un chapeau 12 comportant un oeil 13 de fixation et fixé sur la jupe au moyen de vis 14.

Comme on l'a indiqué plus haut, l'ensemble constitué par l'élément tubulaire 1 est disposé à l'intérieur d'un élément tubulaire externe 2 auquel il est fixé au moyen d'un palier 15 cylindrique en élastomère, au voisinage d'une extrémité, l'agencement étant tel que les extrémités d'un même côté des éléments 1, 2 sont à peu près de niveau, celle de l'élément 2 étant fermée par un chapeau 16, analogue au chapeau 12 de la jupe 11, pourvu d'un oeil 17 de fixation et adapté de manière à délimiter un espace 18 avec l'organe 4 de l'élément 1, espace qui communique avec le bossage tubulaire 6 formant ainsi une chambre fermée par la masse 7 et le palier 15 et remplie d'un liquide L.

A son extrémité opposée, le corps de l'élément 2 comporte une partie de diamètre agrandi formant une cloche 19 qui entoure une partie de la jupe 11 et est reliée à celle-ci de façon indirecte comme on va le décrire.

Une pièce de liaison 20 est disposée à l'intérieur de la jupe 11 et comporte une paroi périphérique 21 dont la forme extérieure correspond à celle intérieure de la jupe, et fermée par une paroi transversale 22.

La pièce 20 est fixée d'une part à la surface interne de la jupe 11 par un palier 23 en élastomère et d'autre part à la cloche 19 par une broche 24 disposée à travers celle-ci et à travers la jupe 11 et la pièce de liaison 20, sans jeu dans les trous correspondants diamétralement opposés prévus dans la cloche 19 et la paroi 21 de la pièce 20, et avec un jeu à travers des ouvertures allongées 25 diamétralement opposées prévues dans la jupe 11.

La paroi transversale 22 de la pièce de liaison 20 fait face à l'organe 4 de l'élément 1, délimitant avec cet organe un espace 26 communiquant avec le bossage tubulaire 6 et formant ainsi une chambre fermée par la masse 7 et le palier 23 et remplie d'un liquide L identique à celui remplissant la chambre 18.

Grâce à cet agencement et aux paliers 15 et 23 en élastomère, les éléments 1 et 2 peuvent se déplacer légèrement axialement l'un par rapport à l'autre dans des limites déterminées par l'élastomère des paliers, ces mouvements relatifs étant limités de façon positive, par la venue en butée de l'extrémité de l'élément 1 contre le chapeau 16 de l'élément 2 d'une part, et la venue en butée de la broche 24 avec les extrémités des ouvertures allongées 25 d'autre part.

Lorsque l'élément 1 se déplace, par exemple vers la gauche en considérant la figure 1 sous l'action d'une force appliquée entre les oeils 13 et 17, l'espace 18 diminue et le liquide L est chassé dans le bossage tubulaire 6.

La masse 7 forme un piston qui est repoussé par la pression du liquide, à l'encontre de l'action du ressort 9 opposé, en coulissant sur les cylindres constitués par les bossages 6, sur une distance qui est supérieure au déplacement relatif des éléments 1 et 2, en raison de la différence entre l'aire de l'organe 4 et la section du bossage 6.

Simultanément, la masse 7 formant piston également sur l'autre bossage 6, déplace un volume équivalent de liquide L dans la chambre 26.

Si la force appliquée entre les oeils 13 et 17 est supprimée, les paliers en élastomère 15 et 23 ramènent les éléments 1 et 2 en position moyenne et simultanément le ressort 9 qui a été comprimé repousse la masse-piston 7 dans sa position intermédiaire.

En fonctionnement dynamique, l'ajustement des bagues de frottement 8 dans la masse 7 sur les bossages 6 est tel que les fuites de liquide à faible viscosité peuvent y être considérées comme négligeables et de plus compensées à chaque alternance par l'effet de symétrie. Par contre, le déplacement statique de la masse 7 est permis par cette possibilité de légère fuite.

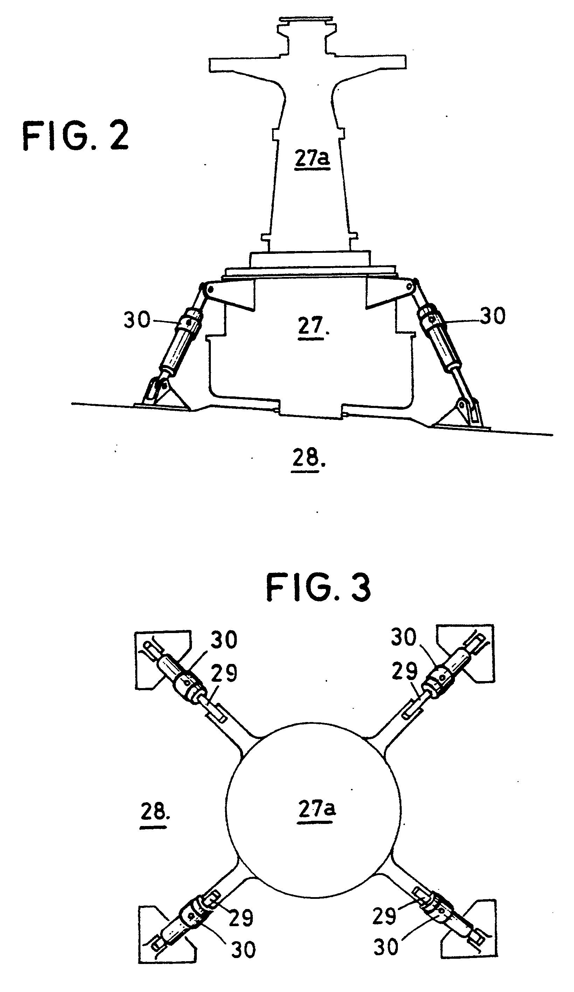

Les figures 2 et 3 montrent un exemple d'application avantageuse du résonateur suivant l'invention.

La boîte principale de transmission 27 d'un hélicoptère est fixée sur le fuselage 28 de celui-ci, surmontée d'un arbre 27a équipé d'un moyeu comme connu en soi, le fond de cette boîte étant également relié au fuselage par exemple au moyen d'une membrane rigide dans son propre plan et souple perpendiculairement à ce plan, comme décrit par FR-2499505 de la demanderesse.

Dans ce dispositif à point focal, il est prévu quatre barres 29 concourantes au point d'oscillation de la boîte, et un bras radial ayant une partie souple et une masse battante fixée à l'extrémité d'un levier rigide solidaire du bras radial.

D'une façon particulièrement avantageuse, chaque barre 29 est constituée par une contre-fiche 30 à résonateur hydro-mécanique intégré suivant l'invention, lequel résonateur remplace dans cette application à la fois le bras radial et la masse battante.

Les efforts statiques axiaux dans la contre-fiche 30 déforment les paliers élastiques 15 et 23 mais n'entraînent pas de déplacements statiques correspondants de la masse 7 en raison des légères fuites permises entre les bagues de frottement 8 dans la masse 7 sur les bossages 6 et de l'action des ressorts de rappel 9 sur la masse 7. En conséquence la course utile de la masse 7 à prévoir est uniquement dynamique, ce qui réduit l'encombrement du dispositif résonateur.

Le résonateur suivant l'invention permet d'obtenir dans un encombrement réduit d'importants rapports d'amplification du mouvement de la masse battante, allant jusqu'au double du plus grand rapport obtenu avec les montages conventionnels, ce qui permet en conséquence de réduire de façon très importante la masse battante, dans un rapport sensiblement inversement proportionnel au carré du rapport d'amplification.

Par ailleurs, le dispositif résonateur ne comportant pas de joints d'étanchéité coulissants, générateurs de frottements donc d'amortissements parasites, il n'y a aucune dégradation des performances anti-vibratoires introduite par les amortissements propres internes au résonateur.

Enfin, l'absence de joints d'étanchéité coulissants et de pièces d'usure est une garantie de grande fiabilité du dispositif suivant l'invention.

## Revendications

1. Contre-fiche élastique incorporant un résonateur hydro-mécanique à système masse/ressort du type à amplification hydraulique du déplacement de la masse battante du type comprenant un corps constitué de deux éléments tubulaires coaxiaux interne (1) et externe (2) reliés ensemble de façon étanche par au moins un élément (15, 23) en matière élastomère de façon à, d'une part, leur permettre sous des sollicitations axiales, des déplacements relatifs limités avec rappel élastique en position moyenne et, d'autre part, à assurer la fermeture étanche de deux chambres hydrauliques (18, 26) disposées à l'intérieur de chaque extrémité desdits éléments tubulaires et remplies d'un liquide à faible viscosité, ladite masse battante (7) constituant un piston à double face monté coulissant à l'intérieur de l'élément tubulaire interne (1) et dont les faces opposées délimitent les deux chambres hydrauliques, caractérisée en ce que les deux éléments tubulaires sont reliés entre eux de façon étanche à leurs extrémités par deux paliers cylindriques (15, 23), en ce que la masse battante est sollicitée en position neutre par deux ressorts antagonistes (9), en ce que la masse battante constitue un piston creux monté coulissant sur deux cylindres creux (6) coaxialement opposés dans une troisième chambre hydraulique fermée constituée à l'intérieur de l'élément tubulaire interne (1) et remplie du même liquide à faible viscosité, lesdits cylindres (6) débouchant chacun dans l'une des chambres hydrauliques disposées à chaque extrémité des éléments tubulaires (1) et (2), et en ce que les surfaces d'extrémités des deux chambres hydrauliques (18, 26) sont égales et plus grandes que les sections internes des deux cylindres creux (6) sur lesquelles coulisse le piston creux (7) à double face.

2. Contre-fiche élastique selon la revendication 1, caractérisée en ce que lesdits cylindres sont des bossages tubulaires (6) solidaires d'organes (4) de fermeture des extrémités dudit élément (1) et s'étendant à l'intérieur de celui-ci, ladite masse-piston (7) étant sollicitée en position neutre par les deux ressorts (9) qui sont disposés autour desdits bossages (6) de part et d'autre de ladite masse (7).

3. Contre-fiche élastique selon la revendication 2, caractérisée en ce que chacun desdits éléments tubulaires interne et externe (1, 2) comporte des moyens externes (13, 17) de fixation et d'introduction des efforts axiaux.

4. Dispositif de suspension à barres pour la boîte de transmission principale sur la structure du fuselage d'un aéronef à voilure tournante caractérisé en ce que chaque barre comporte une contre-fiche élastique à résonateur du type masse-ressort à amplification hydraulique du déplacement de la masse battante selon l'une quelconque des revendications précédentes.

**Patentansprüche**

1. Elastische Strebe mit einem hydro-mechanischen Resonator in Form eines Masse/Federsystems mit einer hydraulischen Verstärkung der Auslenkung der Schwingungsmasse, wobei die Strebe einen aus zwei rohrförmigen, koaxialen, nämlich einem inneren (1) und einem äußeren (2), Elementen aufgebauten Körper aufweist, wobei die Elemente durch mindestens ein Element (15, 23) aus elastomerem Material dicht miteinander verbunden sind, damit die Elemente einerseits unter axialer Belastung durch die elastische Rückstellkraft in die Gleichgewichtslage beschränkte Relativauslenkungen ausführen können und um andererseits einen dichten Verschluß von zwei hydraulischen Kammern (18, 26) zu gewährleisten, die im Innern an jedem Ende der rohrförmigen Elemente angeordnet sind und mit einer schwach viskosen Flüssigkeit gefüllt sind, wobei die Schwingungsmasse (7) aus einem doppelseitigen Kolben besteht, der innenseitig im inneren rohrförmigen Element (1) verschiebbar eingesetzt ist und dessen gegenüberliegende Stirnflächen die beiden hydraulischen Kammern begrenzen, dadurch gekennzeichnet, daß die beiden rohrförmigen Elemente an ihren Enden durch zwei zylindrische Lagerringe (15, 23) dicht miteinander verbunden sind, und daß die Schwingungsmasse durch zwei einander entgegengesetzt wirkende Federn (9) in ihrer Ruhestellung gehalten wird, und daß die Schwingungsmasse einen Hohlkolben bildet, der auf zwei sich in einer dritten hydraulischen geschlossenen Kammer angeordnete, sich koaxial gegenüberstehende Hohlzylinder (6) verschiebbar aufgesetzt ist, wobei die dritte hydraulische Kammer im Innern des inneren rohrförmigen Elements (1) angeordnet ist und ebenfalls mit schwach viskoser Flüssigkeit gefüllt ist, und wobei jeder Hohlzylinder (6) in eine der an jedem Ende der hohlzylinderförmigen Elemente (1, 2) angeordneten hydraulischen Kammer ragt, und daß die Oberflächen der Enden der beiden hydraulischen Kammern (18, 26) einander gleich und größer als die inneren Querschnitte der beiden Hohlzylinder (6) sind, auf denen der doppelseitige Hohlkolben (7) gleitet.

2. Elastische Strebe nach Anspruch 1, dadurch gekennzeichnet, daß die Zylinder als rohrförmige Aufsätze (6) ausgebildet sind, die mit Verschlußmitteln (4) für die Enden des Elements (1) verbunden sind und sich in dessen Inneres erstrecken, wobei der Masse-Kolben (7) von den beiden Federn (9) in seiner Ruhestellung gehalten wird, die um die Aufsätze (6) herum zu beiden Seiten der Masse (7) angeordnet sind.

3. Elastische Strebe nach Anspruch 2, dadurch gekennzeichnet, daß das innere und das äußere rohrförmige Element (1, 2) externe Mittel (13, 17) zur Befestigung und zur Einleitung der axialen Belastungskräfte aufweisen.

4. Aufhängevorrichtung aus Stäben für das Gehäuse des Hauptgetriebes auf dem Rumpf eines Luftfahrzeuges mit einem Rotor, dadurch gekennzeichnet, daß jeder Stab eine elastische Strebe mit einem Resonator vom Masse/Federtyp mit einer hydraulischen Verstärkung der Auslenkung der Schwingungsmasse gemäß einen der vorigen Ansprüche aufweist.

**Claims**

1. An elastic strut incorporating a hydromechanical resonator with a mass/spring system of the type with hydraulic amplification of the displacement of the oscillating mass of the type comprising a body formed by two inner and outer coaxial tubular elements (1) and (2) which are joined together in a fluid-tight manner by at least one member (15, 23) of elastomeric material so as to enable them, on the one hand, to undergo, while being acted upon axially, limited relative displacements with elastic return into a middle position and, on the other hand, to ensure the fluid-tight closure of two hydraulic chambers (18, 26) disposed inside each end of said tubular elements and filled with a low-viscosity liquid, said oscillating mass (7) comprising a double-faced piston mounted to slide inside the inner tubular element (1) and whose opposing faces delimit the two hydraulic chambers, characterised in that the two tubular elements are joined together in a fluid-tight manner at their ends by two cylindrical bearings (15, 23), in that the oscillating mass is urged into a neutral position by two opposed springs (9), in that the oscillating mass comprises a hollow piston mounted to slide on two coaxially opposed hollow cylinders (6) in a third closed hydraulic chamber formed inside the inner tubular element (1) and filled with the same low-viscosity liquid, said cylinders (6) each opening into one of the hydraulic chambers disposed at each end of the tubular elements (1) and (2), and in that the end surfaces of the two hydraulic chambers (18, 26) are alike and larger than the internal sections of the two hollow cylinders (6) on which the double-faced hollow piston (7) slides.

2. An elastic strut according to claim 1, characterised in that said cylinders are tubular projections (6) integral with members (4) for closing the ends of said element (1) and extending inside the latter, said mass-piston (7) being urged into the neutral position by two springs (9) which are disposed around said projections (6) on either side of said mass (7).

3. An elastic strut according to claim 2, characterised in that each of said inner and outer tubular elements (1, 2) comprises outer fastening means (13, 17) for introducing axial forces.

4. A bar-type suspension device for the main gearbox on the fuselage structure of a rotating-wing aircraft, characterised in that each bar comprises an elastic strut with a resonator of mass-spring type with hydraulic amplification of the displacement of the oscillating mass according to any one of the preceding claims.

FIG.1

# FIG. 2

27a

30          27.          30

28.

# FIG. 3

30          30

29          29

28.          27a

29          29

30          30